(19) Europäisches Patentamt
European Patent Office
Office européen des brevets

(11) EP 4 177 083 B1

(12) **EUROPEAN PATENT SPECIFICATION**

(45) Date of publication and mention of the grant of the patent:
**13.11.2024 Bulletin 2024/46**

(21) Application number: **22188789.6**

(22) Date of filing: **04.08.2022**

(51) International Patent Classification (IPC):
***B60C 13/00*** *(2006.01)*

(52) Cooperative Patent Classification (CPC):
**B60C 13/001;** B60C 2013/006; B60C 2013/007; B60C 2200/04; Y02T 10/86

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.11.2021 JP 2021181008**

(43) Date of publication of application:
**10.05.2023 Bulletin 2023/19**

(73) Proprietor: **Sumitomo Rubber Industries, Ltd.**
**Kobe-shi, Hyogo 651-0072 (JP)**

(72) Inventor: **MATSUMOTO, Norihiro**
**Hyogo, 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**JP-A- 2014 061 820** **JP-B2- 5 022 003**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 177 083 B1

**Description**

BACKGROUND OF THE INVENTION

Field of the Invention

The present invention relates to a pneumatic tire and more specifically relates to a pneumatic tire including sidewall portions.

Background Art

In recent years, from the viewpoint of reducing carbon dioxide emissions, there is a strong need to improve the life performance of pneumatic tires (hereinafter, simply referred to as "tires") mounted to automobiles, in addition to low fuel consumption performance.

In particular, the same rubber surface of a sidewall portion of a tire is used from the start of use of the tire until the wear life of the tread portion of the tire, so that the sidewall portion is required to be able to withstand the effects of deterioration factors such as ozone over a long period of time. The factors such as ozone cause microcracks in the sidewall portion.

Therefore, in order to prevent deterioration due to ozone, etc., a rubber composition to which a surface protective agent such as a wax or the like is added is used for the sidewall portion, and the wax or the like exude on the surface of the sidewall portion to form a protective film, which blocks deterioration factors such as ozone (for example, Japanese Laid-Open Patent Publication No. 2018-109126).

However, the surface protective film of the wax or the like increases diffuse reflection of light, which may make it impossible to maintain the matte appearance, and the appearance may be impaired by coloring of the surface protective film. Therefore, some drivers do not like the deterioration of the appearance and may wash off the surface protective film during car washing.

In addition, there is a problem that as the running distance increases, cracks occur in the surface protective film, which may decrease the function to block deterioration factors such as ozone and may impair the appearance.
In JP 5 022 003 B2, a heavy-load tire is disclosed, having a side wall, with a sidewall having an inner side rubber and an outer side rubber, wherein the inner side rubber and the outer side rubber differ from one another in regard to loss tangent, complex modulus and thickness.
In JP 2014 061 820 a pneumatic tire having a sidewall portion is disclosed. The sidewall portion has a decoration pattern, comprising two or more types of ridges with different cross-sectional shapes.

The present invention has been made in view of the above-described problem, and an object of the present invention is to provide a pneumatic tire that can improve its appearance over a long period of time by suppressing diffuse reflection of light by a surface protective film such as a wax at a sidewall portion thereof and reducing occurrence of cracks with an increase in running distance.

SUMMARY OF THE INVENTION

The present inventor has conducted an intensive study to solve the above problem, has found that the problem can be solved by the invention described below, and has completed the present invention.

The present invention is directed to a pneumatic tire including sidewall portions, wherein: at least one of the sidewall portions includes a projection formation portion in which a plurality of micro projections are formed on an outer surface thereof; the micro projections each have a height of not greater than 0.5 mm; the projection formation portion has an area of not less than 10 $mm^2$; the number of the micro projections formed at an interval of not greater than 0.5 mm in at least one direction is 20 or more; when a stress at a tensile strain of 100% and a stress at a tensile strain of 300% of the sidewall portion in a tensile test under an environment of 25°C at a tensile speed of 500 mm/min are denoted by M100 (MPa) and M300 (MPa), respectively, M300/M100 is greater than 4.0; and a loss tangent $\tan\delta$ of the sidewall portion measured under conditions of temperature: 70°C, initial strain: 2.5%, dynamic strain: $\pm$1%, frequency: 10Hz, and deformation mode: tension is not greater than 0.09.

According to the present invention, it is possible to provide a pneumatic tire that can improve its appearance over a long period of time by suppressing diffuse reflection of light by a surface protective film such as a wax at a sidewall portion thereof and reducing occurrence of cracks with an increase in running distance.

BRIEF DESCRIPTION OF THE DRAWINGS

FIG. 1A is a perspective view schematically showing the shape of a projection formation portion of a sidewall portion of a pneumatic tire according to an embodiment of the present invention;
FIG. 1B is a view as seen in arrows X in FIG. 1A;
FIG. 2A is a perspective view schematically showing the shape of a projection formation portion of a sidewall portion of a pneumatic tire according to another embodiment of the present invention; and
FIG. 2B is a view as seen in arrows X in FIG. 2A.

DETAILED DESCRIPTION

[1] Characteristics of Tire of Present Invention

1. Outline

The pneumatic tire of the present invention has the following characteristics.

First, in the pneumatic tire of the present invention, as a structural characteristic, a sidewall portion has a projection formation portion which has an area of not less than 10 $mm^2$ and in which 20 or more micro projections having a height of not greater than 0.5 mm are formed at an interval of not greater than 0.5 mm in at least one direction on an outer surface thereof.

As a characteristic of a rubber composition for the sidewall portion, when a stress at a tensile strain of 100% and a stress at a tensile strain of 300% of the sidewall portion in a tensile test under an environment of 25°C at a tensile speed of 500 mm/min are denoted by M100 (MPa) and M300 (MPa), respectively, M300/M100 is greater than 4.0. In addition, a loss tangent tanδ of the sidewall portion measured under conditions of temperature: 70°C, initial strain: 2.5%, dynamic strain: ±1%, frequency: 10Hz, and deformation mode: tension, is not greater than 0.09.

When the sidewall portion is configured as described above, diffuse reflection of light by a surface protective film such as a wax or the like can be suppressed and matte appearance can be maintained for a long period of time as described in the next section. In addition, impairment of the appearance due to coloring of the surface protective film is suppressed. Furthermore, occurrence of cracks in the surface protective film can be reduced.

The upper limit of M300/M100 is not limited, but M300/M100 is preferably not greater than 10.0.

The height of each micro projection is preferably lower, and more preferably not greater than 0.4 mm. However, the height of each micro projection is preferably not less than 0.01 mm.

In the above, the shape of each micro projection is not particularly limited, and specific examples thereof include a columnar shape, a frustum shape, and a rib shape (ridged shape).

Moreover, the "interval" refers to the minimum linear distance between the tops of the micro projections adjacent to each other when the micro projections are seen in a direction perpendicular to the one direction.

The magnitudes of the height and the interval of each micro projection in the projection formation portion are magnitudes measured in a state where the pneumatic tire is fitted on a normal rim, a normal internal pressure is applied to the pneumatic tire, and no load is applied to the pneumatic tire.

Here, the "normal rim" is a rim that is defined, in a standard system including a standard on which the tire is based, by the standard for each tire, and refers to, for example, the standard rim at an applicable size described in "JATMA YEAR BOOK" in the JATMA (Japan Automobile Tyre Association, Inc.) standard, the "Measuring Rim" described in "STANDARDS MANUAL" in the ETRTO (The European Tyre and Rim Technical Organisation) standard, or the "Design Rim" described in "YEAR BOOK" in the TRA (The Tire and Rim Association, Inc.) standard. In the case of a tire that is not specified in any standard, the "normal rim" refers to the rim having the smallest rim diameter, and, next to this, refers to the rim having the smallest rim width, among rims to which the tire can be fitted and which allow the internal pressure of the tire to be maintained, that is, rims that do not cause air leakage from between the rim and the tire.

The "normal internal pressure" is an air pressure that is defined by the standard for each tire, and refers to the maximum air pressure in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

M100 and M300 are values measured according to the method specified in JIS K6251: 2017.

In addition, tanδ can be measured by, for example, using a viscoelasticity measurement device such as "EPLEXOR (registered trademark)" manufactured by NETZSCH-Gerätebau GmbH.

2. Mechanism for Exhibiting Advantageous Effects in Pneumatic Tire of Present Invention

The mechanism for exhibiting advantageous effects in the pneumatic tire of the present invention, that is, the mechanism by which diffuse reflection of light by a surface protective film such as a wax or the like at the sidewall portion can be suppressed and impairment of the appearance due to cracks in the surface protective film with an increase in

running distance can be reduced, is inferred as follows.

Specifically, in the pneumatic tire of the present invention, a projection formation portion in which a large number of micro projections are provided in a dense state is formed on the outer surface of the sidewall portion in an area not less than a predetermined area. Therefore, owing to the large number of micro projections provided in a dense state as described above, even when a surface protective film of a wax is formed on the sidewall surface, diffuse reflection of light from the sidewall surface is suppressed, and the matte appearance can be maintained for a long period of time.

As for the dense state of the micro projections, etc., specifically, the height of each micro projection is not greater than 0.5 mm, and the projection formation portion in which such micro projections are formed has an area of not less than 10 $mm^2$. Twenty or more micro projections are formed at an interval of not greater than 0.5 mm in at least one direction and provided in a dense state.

Moreover, the rubber composition for the sidewall portion is devised such that when stress is applied from the outside, stress concentration on the surface can be prevented. Specifically, when a stress at a tensile strain of 100% and a stress at a tensile strain of 300% of the sidewall portion in a tensile test under an environment of 25°C at a tensile speed of 500 mm/min are denoted by M100 (MPa) and M300 (MPa), respectively, M300/M100 is set to be not less than a predetermined value, specifically, to be greater than 4.0. Accordingly, when the sidewall portion becomes deformed during rolling, the sidewall portion can become flexibly deformed to prevent stress concentration on the surface, and the sidewall portion can have stress sufficient to withstand large deformation, so that occurrence of cracks can also be suppressed.

Since stress concentration on the surface can be prevented, the entire sidewall portion moves so as to follow an external force without becoming locally deformed, and cracks in the surface protective film are prevented. As a result, a decrease in the function to block ozone is suppressed. In addition, diffuse reflection of light due to cracks in the surface protective film of the wax is suppressed, and the matte appearance can be maintained for a long period of time.

From the viewpoint of crack resistance, the above-described M300 is preferably not less than 3.0 MPa, more preferably not less than 4.0 MPa, and further preferably not less than 5.0 MPa. On the other hand, the upper limit of M300 is not particularly limited, but M300 is preferably not greater than 20 MPa, more preferably not greater than 18 MPa, and further preferably not greater than 15 MPa.

Moreover, from the viewpoint of alleviating stress concentration on the surface of the sidewall portion, the above-described M100 is preferably not greater than 5.0 MPa, more preferably not greater than 4.5 MPa, and further preferably not greater than 4.0 MPa. On the other hand, the lower limit of M100 is not particularly limited, but M100 is preferably not less than 0.8 MPa, more preferably not less than 1.0 MPa, and further preferably not less than 1.2 MPa.

Moreover, the above-described M300 and M100 can be adjusted as appropriate based on the amount and type of a filler and the amount of a vulcanizing agent of the rubber composition for forming the sidewall portion, etc. Specifically, M300 can be increased by, for example, increasing the amount of the filler, increasing the particle diameter of the filler, or using carbon black as the filler, while M100 can be reduced by, for example, decreasing the amount of a crosslinking agent such as sulfur and a vulcanization accelerator. M300/M100 can be easily improved by combining these adjustments.

Furthermore, in the pneumatic tire of the present invention, the loss tangent tanδ of the sidewall portion is set to be not greater than a certain value to achieve low heat generation. Specifically, the loss tangent tanδ measured under conditions of temperature: 70°C, initial strain: 2.5%, dynamic strain: ±1%, frequency: 10Hz, and deformation mode: tension is set to be not greater than 0.09. As a result, low heat generation is achieved, and heat generation during rolling is suppressed, so that excessive exudation of the wax is prevented. Therefore, the wax layer is prevented from becoming thicker on the surface of the sidewall portion, and effects such as suppression of diffuse reflection of light from the surface are exhibited over a long period of time.

The above-described tanδ is not particularly limited as long as tanδ is not greater than 0.09, but tanδ is preferably not greater than 0.085 and more preferably not greater than 0.08. On the other hand, the lower limit of tanδ is not particularly limited, but tanδ is preferably not less than 0.04, more preferably not less than 0.045, and further preferably not less than 0.050.

The above-described tanδ can be adjusted as appropriate by changing the type of a rubber component, the type of the filler, the amount of the filler, and the amount of the vulcanizing agent of the rubber composition for forming the sidewall portion, etc. Specifically, tanδ can be reduced by, for example, using a rubber component having a low glass transition temperature such as natural rubber or butadiene rubber, increasing the particle diameter of the filler, reducing the amount of the filler, and increasing the amount of the vulcanizing agent such as sulfur and a vulcanization accelerator.

[2] More Preferable Mode of Pneumatic Tire of Present Invention

In the pneumatic tire of the present invention, M300/M100 is preferably not less than 4.5. Accordingly, stress concentration on the surface of the sidewall portion during running can be further prevented.

Moreover, in the pneumatic tire of the present invention, when a tire cross-sectional height is denoted by H (mm), H and tanδ preferably satisfy the following (Expression 1).

$$\tan\delta \times H \leq 8.64 \qquad \text{(Expression 1)}$$

In other words, the cross-sectional height of the sidewall portion increases as the tire cross-sectional height H (mm) increases. As the cross-sectional height of the sidewall portion increases, the volume of the sidewall portion increases, making it easier to store heat therein. On the other hand, heat storage is suppressed by degreasing tanδ in inverse proportion to the magnitude of H to suppress heat generation. As a result, when tanδ×H is set to be not greater than a certain value, an increase in the temperature of the sidewall portion is suppressed, so that it is considered that it is possible to make it easier to suppress excessive exudation of the wax.
Specifically, when tanδ and H satisfy (Expression 1), the advantageous effects of the present invention can be more effectively exerted.
When the outer diameter of the tire when the tire is fitted on the normal rim and the internal pressure of the tire is set to 250 kPa is denoted by dt (mm), the tire cross-sectional height H (mm) can be obtained as 1/2 of a value obtained by subtracting a rim diameter R (mm) from dt (mm).
Moreover, in the pneumatic tire of the present invention, when a tire cross-sectional width is denoted by Wt (mm), Wt, M300, and M100 preferably satisfy (Expression 2).

$$Wt \times (M300/M100) \geq 740 \qquad \text{(Expression 2)}$$

In other words, as the tire cross-sectional width decreases, the amount of deformation applied to the sidewall portion increases, so that it is considered that cracks in the surface protective film of the wax or the like are likely to be caused. Therefore, it is considered that when the cross-sectional width is small, stress concentration is made to be less likely to occur by increasing M300/M100, whereby it is possible to prevent cracks in the surface protective film of the wax or the like and maintain the appearance.
Specifically, when the product of the tire cross-sectional width Wt and (M300/M100) is set to be not less than 740 as shown in (Expression 2), stress concentration is less likely to occur, so that it is possible to make it easier to prevent cracks in the surface protective film and maintain the appearance.
In the above, the tire cross-sectional width Wt is the width obtained by excluding patterns, characters, and the like on the side surfaces of the tire from the linear distance between sidewalls which include all such patterns and characters on the side surfaces of the tire (the total width of the tire) in the tire in a state where the tire is fitted on the normal rim, the internal pressure thereof is set to 250 kPa, and no load is applied to the tire.
Moreover, in the pneumatic tire of the present invention, in order to be able to stably exert the function of the micro projections, each micro projection preferably has a vertical cross-section in which the width thereof gradually decreases from the bottom surface side to the top surface side.
Specific examples of such micro projections include trapezoidal projections, and rib-shaped projections having a vertical cross-section having a trapezoidal shape in the width direction.
Moreover, in the pneumatic tire of the present invention, from the viewpoint of flexibility of the sidewall portion and suppression of deformation of the sidewall portion during rolling, the thickness at a cross-sectional width position of the sidewall portion is preferably not less than 2 mm and not greater than 15 mm, and more preferably not greater than 10 mm.
In the above, the "thickness at the cross-sectional width position" is a thickness that is the thickness at a position in the tire radial direction at which the tire cross-sectional width Wt is measured, in the tire in a state where the tire is fitted on the normal rim, the internal pressure thereof is set to 250 kPa, and no load is applied to the tire, and that is the thickness obtained by excluding the patterns, the characters, and the like. Simply, this thickness can be obtained by measuring the thickness, in the direction perpendicular to the tire surface, of the rubber composition for forming the sidewall portion at the cross-sectional width position in a state where the bead portion is fixed such that the width thereof matches a normal rim width in a cross-section obtained by cutting out the tire in the radial direction.
Moreover, in order to more effectively exert the effect of suppressing diffuse reflection of light from the sidewall surface, the pneumatic tire of the present invention preferably has a surface roughness of not less than 5 μm and not greater than 30 μm in a region having an area that is at least 1/4 of the area of the micro projections.
The surface roughness is a ten-point average roughness Rz measured according to JIS B 0601 (2001), and is measured by using a known measuring instrument such as a stylus-type surface roughness measuring instrument.
Moreover, in the pneumatic tire of the present invention, from the viewpoint of stable self-standing and flexibility of the micro projections, the diameter at the bottom surface of each micro projection is preferably not less than 0.03 mm

and not greater than 0.5 mm. In addition, in the case of rib-shaped micro projections, the width in the one direction of each micro projection is preferably not less than 0.03 mm and not greater than 0.5 mm.

Moreover, the maximum width of each micro projection is preferably not less than 0.03 mm and not greater than 0.5 mm.

Moreover, the interval between the micro projections adjacent to each other is preferably not greater than 0.2 mm.

Moreover, the projection formation portion preferably has an area of not less than 15 $mm^2$.

[3] Embodiments

Hereinafter, the present invention will be specifically described based on embodiments.

<1> Sidewall Portion

1. Projection Formation Portion

In a projection formation portion, 20 or more micro projections are formed at an interval of not greater than 0.5 mm in at least one direction. FIG. 1A is a perspective view schematically showing the shape of a projection formation portion of a sidewall portion of a pneumatic tire according to one embodiment of the present invention, and FIG. 1B is a view as seen in arrows X in FIG. 1A, and is a view of a side surface of the projection formation portion as seen in a direction perpendicular to the one direction. In addition, FIG. 2A is a perspective view schematically showing the shape of a projection formation portion of a sidewall portion of a pneumatic tire according to another embodiment of the present invention, and FIG. 2B is a view as seen in arrows X in FIG. 2A, and is a view of a side surface of the projection formation portion as seen in a direction perpendicular to the one direction.

In each drawing, reference character 1 denotes a side wall portion, reference character 2 denotes a sidewall, and reference character 21 denotes the outer surface of the sidewall. In addition, reference character 3 denotes a projection formation portion, and reference characters 4 and 5 denote micro projections. The micro projections 4 and 5 have bottom surfaces 41 and 51 and top surfaces 42 and 52, respectively.

As described above, examples of the micro projections include columnar projections and frustum-shaped projections having a rectangular vertical cross-section, and rib-shaped projections. The shapes of the horizontal cross-sections of the columnar projections and the frustum-shaped projections are not particularly limited, examples thereof include circular, elliptical, and polygonal shapes, and specific examples of such micro projections include micro projections having a circular column shape, a quadrangular column shape, a truncated cone shape, and a truncated pyramid shape. In addition, the shapes of the cross-sections perpendicular to the longitudinal direction of the rib-shaped micro projections are not particularly limited, but are preferably rectangular shapes or trapezoidal shapes.

In FIG. 1A and FIG. 1B, micro projections having a trapezoidal shape and having a circular horizontal cross-section are shown. Each micro projection 4 has a height h of 0.5 mm, and the diameter of a bottom surface which is a maximum width w of the micro projection is 0.5 mm. In addition, the micro projections 4 are formed at an interval d of not greater than 0.5 mm in one direction.

In FIG. 2A and FIG. 2B, rib-shaped micro projections are shown. A plurality of rib-shaped micro projections 5 are substantially parallel and formed in one direction. Each micro projection 5 has a height h of 0.5 mm. In addition, the width of a bottom portion which is a maximum width w of the micro projection is 0.5 mm, and an interval d is not greater than 0.5 mm.

2. Sidewall Rubber Composition

The sidewall portion is produced by molding a sidewall rubber composition containing blending materials described below, into a predetermined shape.

(1) Blending Materials

(a) Rubber Component

In the present embodiment, the rubber component is not particularly limited, and rubbers (polymers) generally used in the production of tires, such as isoprene-based rubbers, diene-based rubbers such as butadiene rubber (BR), styrene-butadiene rubber (SBR), and nitrile rubber (NBR), and butyl-based rubbers such as isobutylene-isoprene-rubber, can be used. Among them, an isoprene-based rubber and butadiene rubber are preferably contained from the viewpoint that a phase-separation structure is formed and cracks are less likely to occur during deformation. SBR and another rubber component may also be used as necessary.

(I) Isoprene-Based Rubber

From the viewpoint of exhibiting good tensile strength and making it less likely to cause damage such as cracks from deformation, the amount (total amount) of the isoprene-based rubber in 100 parts by mass of the rubber component is preferably not less than 30 parts by mass and more preferably not less than 35 parts by mass. On the other hand, from the viewpoint of forming a phase-separation structure together with another rubber component and preventing the development of cracks and fractures inside the rubber, the amount (total amount) of the isoprene-based rubber is preferably not greater than 50 parts by mass and more preferably not greater than 45 parts by mass.

Examples of the isoprene-based rubber include natural rubber (NR), isoprene rubber (IR), reformed NR, modified NR, and modified IR, and NR is preferable since NR has excellent strength.

As the NR, for example, NRs that are generally used in the tire industry, such as SIR20, RSS#3, and TSR20, can be used. The IR is not particularly limited, and, as the IR, for example, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination.

(II) BR

In the present embodiment, as the rubber component, BR is preferably used together with the isoprene-based rubber. From the viewpoint of suppressing the development of cracks and fractures, the amount of the BR is preferably not less than 50 parts by mass and more preferably not less than 55 parts by mass. On the other hand, the amount of the BR is preferably not greater than 70 parts by mass and more preferably not greater than 65 parts by mass.

The weight-average molecular weight of the BR is, for example, greater than 100 thousand and less than 2 million. The vinyl bond content (1,2-bond butadiene unit content) of the BR is, for example, greater than 1% by mass and less than 30% by mass. The cis content of the BR is, for example, greater than 1% by mass and not greater than 98% by mass. The trans content of the BR is, for example, greater than 1% by mass and less than 60% by mass. The cis content can be measured by infrared absorption spectrometry.

The BR is not particularly limited, and a BR having a high cis content (a cis content of 90% or higher), a BR having a low cis content, a BR containing syndiotactic polybutadiene crystals, etc., can be used. The BR may be either an unmodified BR or a modified BR, and, for example, an S-modified BR modified with a compound (modifier) represented by the following formula can be used as the modified BR.

[Chem. 1]

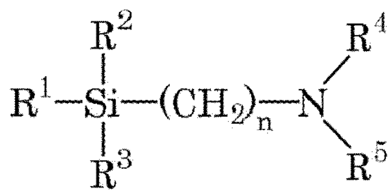

In the formula, $R^1$, $R^2$, and $R^3$ are the same or different from each other, and each represent an alkyl group, an alkoxy group, a silyloxy group, an acetal group, a carboxyl group (-COOH), a mercapto group (-SH), or a derivative thereof. $R^4$ and $R^5$ are the same or different from each other, and each represent a hydrogen atom or an alkyl group. $R^4$ and $R^5$ may be linked together to form a ring structure together with a nitrogen atom. "n" represents an integer.

An example of the modified BR modified with the compound (modifier) represented by the above formula is a BR obtained by modifying polymerization terminals (active terminals) with the compound represented by the above formula.

As $R^1$, $R^2$, and $R^3$, an alkoxy group is suitable (an alkoxy group preferably having 1 to 8 carbon atoms, more preferably 1 to 4 carbon atoms). As $R^4$ and $R^5$, an alkyl group (preferably, an alkyl group having 1 to 3 carbon atoms) is suitable. The integer "n" is preferably not less than 1 and not greater than 5, more preferably not less than 2 and not greater than 4, and further preferably 3. In addition, when $R^4$ and $R^5$ are linked together to form a ring structure together with the nitrogen atom, a four to eight-membered ring is preferably formed. Examples of the alkoxy group include cycloalkoxy groups (a cyclohexyloxy group, etc.) and aryloxy groups (a phenoxy group, a benzyloxy group, etc.).

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These compounds may be used individually, or two or more of these compounds may be used in combination.

As the modified BR, a modified BR modified with the following compound (modifier) can also be used. Examples of the modifier include: polyglycidyl ethers of polyhydric alcohols, such as ethylene glycol diglycidyl ether, glycerin triglycidyl ether, trimethylolethane triglycidyl ether, and trimethylolpropane triglycidyl ether; polyglycidyl ethers of aromatic compounds having two or more phenol groups, such as diglycidylated bisphenol A; polyepoxy compounds such as 1,4-diglycidylbenzene, 1,3,5-triglycidylbenzene, and polyepoxylated liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxy aniline, diglycidyl orthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3-bisaminomethylcyclohexane; amino group-containing acid chlorides such as bis-(1-methylpropyl)carbamic acid chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis-(glycidyloxypropyl)-tetramethyldisiloxane and (3-glycidyloxypropyl)-pentamethyldisiloxane; sulfide group-containing silane compounds such as (trimethylsilyl) [3-(trimethoxysilyl)propyl] sulfide, (trimethylsilyl)[3-(triethoxysilyl)propyl] sulfide, (trimethylsilyl) [3-(tripropoxysilyl)propyl] sulfide, (trimethylsilyl) [3-(tributoxysilyl)propyl] sulfide, (trimethylsilyl) [3-(methyldimethoxysilyl)propyl] sulfide, (trimethylsilyl) [3-(methyldiethoxysilyl)propyl] sulfide, (trimethylsilyl) [3-(methyldipropoxysilyl)propyl] sulfide, and (trimethylsilyl)[3-(methyldibutoxysilyl)propyl]sulfide; N-substituted aziridine compounds such as ethyleneimine and propyleneimine; alkoxysilanes such as methyltriethoxysilane, N,N-bis(trimethylsilyl)-3-aminopropyltrimethoxysilane, N,N-bis(trimethylsilyl)-3-aminopropyltriethoxysilane, N,N-bis(trimethylsilyl)aminoethyltrimethoxysilane, and N,N-bis(trimethylsilyl)aminoethyltriethoxysilane; (thio)benzophenone compounds having an amino group and/or a substituted amino group, such as 4-N,N-dimethylaminobenzophenone, 4-N,N-dit-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis-(tetraethylamino)benzophenone; benzaldehyde compounds having an amino group and/or a substituted amino group, such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurolactam, N-vinyl-ω-laurolactam, N-methyl-β-propiolactam, and N-phenyl-β-propiolactam; and moreover, N,N-bis-(2,3-epoxypropoxy)-aniline, 4,4-methylene-bis-(N,N-glycidylaniline), tris-(2,3-epoxypropyl)-1,3,5-triazine-2,4,6-triones, N,N-diethylacetamide, N-methylmaleimide, N,N-diethyl urea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. Modification with the above compounds (modifiers) can be carried out by a known method.

As the modified BR, for example, a tin-modified BR can also be used. As the tin-modified BR, a BR obtained by polymerizing 1,3-butadiene with a lithium initiator and then adding a tin compound to the polymerized 1,3-butadiene and in which the terminals of the modified BR molecules are bound to each other through tin-carbon bonds, is preferable.

Examples of the lithium initiator include lithium-based compounds such as alkyl lithiums, aryl lithiums, vinyl lithium, organotin lithium, and organic nitrogen lithium compounds, and lithium metal. A tin-modified BR with a high vinyl content and a low cis content can be manufactured using the lithium initiator as an initiator for the tin-modified BR.

Examples of the tin compound include tin tetrachloride, butyltin trichloride, dibutyltin dichloride, dioctyltin dichloride, tributyltin chloride, triphenyltin chloride, diphenyldibutyltin, triphenyltin ethoxide, diphenyldimethyltin, ditolyltin chloride, diphenyltin dioctanoate, divinyldiethyltin, tetrabenzyltin, dibutyltin distearate, tetraaryltin, and p-tributyltin styrene.

The content of tin atoms in the tin-modified BR is preferably not less than 50 ppm and more preferably not less than 60 ppm. On the other hand, the content of tin atoms is preferably not greater than 3000 ppm, more preferably not greater than 2500 ppm, and further preferably not greater than 250 ppm.

The molecular weight distribution (Mw/Mn) of the tin-modified BR is preferably not greater than 2 and more preferably not greater than 1.5.

The vinyl bond content of the tin-modified BR is preferably not less than 5% by mass and more preferably not less than 7% by mass. On the other hand, the vinyl bond content of the tin-modified BR is preferably not greater than 50% by mass and more preferably not greater than 20% by mass.

The above S-modified BRs or tin-modified BRs may be used individually, or two or more of the above S-modified BRs or tin-modified BRs may be used in combination.

As the BR, for example, products of UBE Corporation, JSR Corporation, Asahi Kasei Corporation, Zeon Corporation, etc., can be used.

(III) SBR

Moreover, in the present embodiment, the rubber component may contain SBR as a part of the BR, specifically, in an amount of not less than 25 parts by mass and not greater than 35 parts by mass, as necessary.

The weight-average molecular weight of the SBR is, for example, greater than 100 thousand and less than 2 million. The styrene content of the SBR is, for example, preferably greater than 5% by mass, more preferably greater than 10% by mass, and further preferably greater than 20% by mass. On the other hand, the styrene content of the SBR is preferably less than 50% by mass, more preferably less than 40% by mass, and further preferably less than 35% by mass. The vinyl bond content of the SBR is, for example, preferably greater than 5% by mass and less than 70% by mass. SBR structure identification (measurement of styrene content and vinyl bond content) can be performed by using, for example, a JNM-ECA series device manufactured by JEOL Ltd.

The SBR is not particularly limited, and, for example, an emulsion-polymerized styrene-butadiene rubber (E-SBR), a solution-polymerized styrene-butadiene rubber (S-SBR), etc., can be used. The SBR may either be an unmodified SBR or a modified SBR, and these SBRs may be used individually, or two or more of these SBRs may be used in combination.

The modified SBR only has to be an SBR having a functional group that interacts with a filler such as silica, and examples of such a modified SBR include a terminal-modified SBR obtained by modifying at least one terminal of an SBR with a compound (modifier) having the functional group (a terminal-modified SBR having the functional group at a terminal thereof), a main chain-modified SBR having the functional group in the main chain thereof, a main chain/terminal-modified SBR having the functional group in the main chain and at a terminal thereof (for example, a main chain/terminal-modified SBR that has the functional group in the main chain thereof and in which at least one terminal thereof is modified with the modifier), and a terminal-modified SBR that is modified (coupled) by using a multifunctional compound having two or more epoxy groups in the molecule thereof and to which a hydroxyl group or an epoxy group is introduced.

As the SBR, for example, SBRs manufactured by and available from SUMITOMO CHEMICAL COMPANY, LIMITED, JSR Corporation, Asahi Kasei Corporation, Zeon Corporation, etc., can be used. These SBRs may be used individually, or two or more of these SBRs may be used in combination.

(IV) Other Rubber Component

Moreover, as another rubber component, a rubber (polymer) generally used in the production of tires, such as nitrile rubber (NBR), may be contained as necessary.

In the present invention, the sidewall rubber composition may contain, for example, a composite material containing at least one functional group with a metal coordinating ability in a molecular structure thereof, or the like. Here, the functional group with a metal coordinating ability is not particularly limited as long as the functional group has a metal coordinating ability, and examples of such a functional group include functional groups containing metal-coordinating atoms such as oxygen, nitrogen, and sulfur atoms. Specific examples of such a functional group include dithiocarbamic acid groups, phosphoric acid groups, carboxylic acid groups, carbamic acid groups, dithioic acid groups, amino phosphoric acid groups, and thiol groups. Only one of the above functional groups may be contained, or two or more of the above functional groups may be contained.

Examples of the coordination metal to the functional group include Fe, Cu, Ag, Co, Mn, Ni, Ti, , V, Zn, Mo, W, Os, Mg, Ca, Sr, Ba, Al, and Si. For example, in a polymer material that is blended with a compound having such a metal atom (M1) and that contains a functional group (-COO, etc.) with a metal coordinating ability, each -COOM1 is coordinately bonded and a large number of -COOM1s overlap, thereby forming clusters of aggregated metal atoms. The blending amount of the metal atom (M1) per 100 parts by mass of the polymer component in the polymer material is preferably not less than 0.01 parts by mass and not greater than 200 parts by mass.

(b) Blending Materials Other Than Rubber Component

(I) Filler

In the present embodiment, the sidewall rubber composition preferably contains a filler (reinforcing filler). Examples of the filler include short fiber materials such as carbon black, silica, calcium carbonate, and cellulose nanofibers, and fillers represented by $mM_2 \cdot xSiO_y \cdot zH_2O$ (wherein $M_2$ represents at least one metal selected from the group consisting of aluminum, calcium, magnesium, titanium, or zirconium, an oxide, a hydroxide, a hydrate, or a carbonate of said metal, m is 1 to 5, x is 0 to 10, y is 2 to 5, and z is a numerical value in a range of 0 to 10 (inclusive)).

Specific examples of the fillers represented by $mM_2 \cdot {}_xSiO_y \cdot zH_2O$ include aluminum hydroxide ($Al(OH)_3$), alumina ($Al_2O_3$, $Al_2O_3 \cdot 3H_2O$ (hydrate)), clay ($Al_2O_3 \cdot 2SiO_2$), kaolin ($Al_2O_3 \cdot 2SiO_2 \cdot 2H_2O$), pyrophyllite ($Al_2O_3 \cdot 4SiO_2 \cdot H_2O$), bentonite ($Al_2O_3 \cdot 4SiO_2 \cdot 2H_2O$), aluminum silicate ($Al_2SiO_5$, $Al_4(SiO_2)_3 \cdot 5H_2O$, etc.), calcium aluminum silicate

($Al_2O_3 \cdot CaO \cdot 2SiO_2$), calcium hydroxide ($Ca(OH)_2$), calcium oxide (CaO), calcium silicate ($Ca_2SiO_4$), calcium magnesium silicate ($CaMgSiO_4$), magnesium hydroxide ($Mg(OH)_2$), magnesium oxide (MgO), talc ($MgO \cdot 4SiO_2 \cdot H_2O$), attapulgite ($5MgO \cdot 8SiO_2 \cdot 9H_2O$), magnesium aluminum oxide ($MgO \cdot Al_2O_3$), titanium white ($TiO_2$), and titanium black ($Ti_nO_{2n-1}$). In the polymer material containing such a filler, clusters of the aggregated filler are formed.

(i) Carbon Black

The sidewall rubber composition preferably contains carbon black. The amount of the carbon black per 100 parts by mass of the rubber component is, for example, preferably not less than 10 parts by mass and not greater than 100 parts by mass, more preferably not less than 15 parts by mass and not greater than 60 parts by mass, and further preferably not less than 25 parts by mass and not greater than 55 parts by mass.

The carbon black is not particularly limited, and examples of the carbon black include: furnace black (furnace carbon black) such as SAF, ISAF, HAF, MAF, FEF, SRF, GPF, APF, FF, CF, SCF, and ECF; acetylene black (acetylene carbon black); thermal black (thermal carbon black) such as FT and MT; and channel black (channel carbon black) such as EPC, MPC, and CC. One of these carbon blacks may be used alone, or two or more of these carbon blacks may be used in combination.

The nitrogen adsorption specific surface area ($N_2SA$) of the carbon black is, for example, greater than 30 $m^2/g$ and less than 250 $m^2/g$. The dibutyl phthalate (DBP) absorption amount of the carbon black is, for example, greater than 50 ml/100 g and less than 250 ml/100 g. The nitrogen adsorption specific surface area of the carbon black is measured according to ASTM D4820-93, and the DBP absorption amount of the carbon black is measured according to ASTM D2414-93.

The carbon black is not particularly limited, and specific examples of the carbon black include N110, N115, N120, N121, N125, N134, N135, N219, N220, N231, N234, N293, N299, N326, N330, N335, N339, N343, N347, N351, N356, N358, N375, N539, N550, N582, N630, N642, N650, N660, N683, N754, N762, N765, N772, N774, N787, N907, N908, N990, and N991. As commercially available products, for example, products of Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon Co., etc., can be used, and originally synthesized carbon black, etc., can also be used. These carbon blacks may be used individually, or two or more of these carbon blacks may be used in combination.

(ii) Silica

The sidewall rubber composition preferably further contains silica as necessary. From the viewpoint of obtaining good durability, the BET specific surface area of the silica is preferably greater than 140 $m^2/g$ and more preferably greater than 160 $m^2/g$. On the other hand, from the viewpoint of obtaining good low rolling resistance, the BET specific surface area of the silica is preferably less than 250 $m^2/g$ and more preferably less than 220 $m^2/g$.

In the case where a silane coupling agent is not used together with the silica, the amount of the silica per 100 parts by mass of the rubber component is preferably not less than 3 parts by mass and more preferably not less than 5 parts by mass. On the other hand, the amount of the silica is preferably not greater than 25 parts by mass and more preferably not greater than 15 parts by mass. In addition, in the case where a silane coupling agent is used together with the silica, the amount of the silica is preferably not less than 25 parts by mass. On the other hand, the amount of the silica is preferably not greater than 50 parts by mass, more preferably not greater than 40 parts by mass, and further preferably not greater than 30 parts by mass. The above BET specific surface area is a value of $N_2SA$ measured by the BET method according to ASTM D3037-93.

Examples of the silica include dry-process silica (anhydrous silica) and wet-process silica (hydrous silica). Between them, wet-process silica is preferable for the reason that it has a higher silanol group content. In addition, silica using hydrous glass or the like as a raw material, silica using a biomass material such as rice husks as a raw material, etc., may be used.

As the silica, for example, products of Evonik Industries Ag, Rhodia, Tosoh Silica Corporation, Solvay Japan, Ltd., Tokuyama Corporation, etc., can be used.

(iii) Silane Coupling Agent

As described above, it is also possible to use a silane coupling agent together when using silica. The silane coupling agent is not particularly limited, and examples of the silane coupling agent include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z manufactured by Momentive Performance Materials, Inc.; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These silane coupling agents may be used individually, or two or more of these silane coupling agents may be used in combination.

As the silane coupling agent, for example, products of Evonik Industries Ag, Momentive Performance Materials, Inc., Shin-Etsu Silicones, Tokyo Chemical Industry Co., Ltd., AZmax.co, DuPont Toray Specialty Materials K.K., etc., can be used.

The amount of the silane coupling agent per 100 parts by mass of the silica is, for example, greater than 3 parts by mass and less than 15 parts by mass.

(iv) Other Filler

In addition to the above-described carbon black and silica, the sidewall rubber composition may further contain fillers generally used in the tire industry, such as graphite, calcium carbonate, talc, alumina, clay, aluminum hydroxide, and mica. The amount of each of these fillers per 100 parts by mass of the rubber component is, for example, greater than 0.1 parts by mass and less than 200 parts by mass.

(II) Curable Resin Component

The sidewall rubber composition may contain a curable resin component such as a modified resorcinol resin and a modified phenol resin as necessary.

Specific examples of the modified resorcinol resin include SUMIKANOL 620 (modified resorcinol resin) manufactured by Taoka Chemical Co., Ltd., and examples of the modified phenol resin include PR12686 (cashew oil-modified phenol resin) manufactured by Sumitomo Bakelite Co., Ltd.

From the viewpoint of sufficiently improving the complex elastic modulus and obtaining a large reaction force during deformation, the amount of the curable resin component per 100 parts by mass of the rubber component is preferably not less than 1 part by mass and more preferably not less than 2 parts by mass. On the other hand, from the viewpoint of maintaining break strength, the amount of the curable resin component is preferably not greater than 10 parts by mass and more preferably not greater than 8 parts by mass.

When the modified resorcinol resin is used, a methylene donor is preferably contained as a curing agent in combination. Examples of the methylene donor include hexamethylenetetramine (HMT), hexamethoxy methylol melamine (HMMM), and hexamethylol melamine pentamethyl ether (HMMPME), and the methylene donor is preferably contained, for example, in an amount of about not less than 5 parts by mass and not greater than 15 parts by mass per 100 parts by mass of the curable resin component. If the amount of the methylene donor is excessively small, there is a possibility that a sufficient complex elastic modulus is not obtained. On the other hand, if the amount of the methylene donor is excessively large, there is a possibility that the viscosity of the rubber increases and the processability deteriorates.

As a specific methylene donor, for example, SUMIKANOL 507 manufactured by Taoka Chemical Co., Ltd., etc., can be used.

(III) Plasticizer Component

The sidewall rubber composition may contain an oil (including extender oil) as a component for softening the rubber, a liquid rubber, and a resin as a plasticizer component, as necessary. The plasticizer component is a component that can be extracted from a vulcanized rubber with acetone. The total amount of the plasticizer component per 100 parts by mass of the rubber component is preferably greater than 5 parts by mass and more preferably greater than 10 parts by mass. On the other hand, the total amount of the plasticizer component is preferably less than 70 parts by mass, more preferably less than 50 parts by mass, and further preferably less than 30 parts by mass. The amount of the oil incudes the amount of oil included in rubber (oil-extended rubber).

(i) Oil

Examples of the oil include mineral oils (generally called process oils), vegetable fats and oils, and mixtures

thereof. As the mineral oil (process oil), for example, paraffinic process oil, aromatic process oil, naphthenic process oil, or the like can be used. Examples of the vegetable fats and oils include castor oil, cotton seed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. In addition, from the viewpoint of life cycle assessment, lubricating oil that has been used for mixers such as a rubber mixing machine, and automobile engines, waste cooking oil used in restaurants and the like, etc., may be refined and used as appropriate. These oils may be used individually, or two or more of these oils may be used in combination.

As the specific process oil (mineral oil), for example, products of Idemitsu Kosan Co., Ltd., Sankyo Yuka Kogyo K.K., ENEOS Corporation, Olisoy, H&R, Hokoku Corporation, Idemitsu Kosan Co.,Ltd., FUJI KOSAN COMPANY, LTD., etc., can be used.

(ii) Liquid Rubber

The liquid rubber described as a plasticizer is a polymer in a liquid state at room temperature (25°C), and is a rubber component that can be extracted from the tire after vulcanization, by extraction with acetone. Examples of the liquid rubber include a farnesene-based polymer, a liquid diene-based polymer, and hydrogenated products thereof.

The farnesene-based polymer is a polymer obtained by polymerizing farnesene, and has a structural unit based on farnesene. As farnesene, there are isomers such as $\alpha$-farnesene ((3E,7E)-3,7,11-trimethyl-1,3,6,10-dodecatetraene) and $\beta$-famesene (7,11-dimethyl-3-methylene-1,6,10-dodecatriene).

The farnesene-based polymer may be a homopolymer of farnesene (farnesene homopolymer), or a copolymer of farnesene and a vinyl monomer (farnesene-vinyl monomer copolymer).

Examples of the liquid diene-based polymer include liquid styrene-butadiene copolymers (liquid SBRs), liquid butadiene polymers (liquid BRs), liquid isoprene polymers (liquid IRs), and liquid styrene-isoprene copolymers (liquid SIRs).

The liquid diene-based polymer is, for example, a polymer having a weight-average molecular weight (Mw), of greater than $1.0\times10^3$ and less than $2.0\times10^5$, measured by gel permeation chromatography (GPC) in terms of polystyrene. In the present description, the Mw of the liquid diene-based polymer is a value that is measured by gel permeation chromatography (GPC) and obtained by polystyrene conversion.

The amount of the liquid rubber (total amount of a liquid farnesene-based polymer, a liquid diene-based polymer, etc.) per 100 parts by mass of the rubber component is, for example, greater than 1 part by mass and less than 100 parts by mass.

As the liquid rubber, for example, products of KURARAY CO., LTD., Cray Valley, etc., can be used.

(iii) Resin Component

The resin component also functions as an adhesiveness imparting component, and may be solid or liquid at room temperature. Specific examples of the resin component include rosin-based resins, styrene-based resins, coumarone-based resins, terpene-based resins, C5 resins, C9 resins, C5C9 resins, and acrylic-based resins, and two or more of these resins may be used in combination. The amount of the resin component per 100 parts by mass of the rubber component is preferably greater than 2 parts by mass and less than 45 parts by mass, and more preferably less than 30 parts by mass. These resin components are distinguished from the thermally curable resin components described above, and are components that can be extracted from a vulcanized rubber with a solvent such as acetone.

The rosin-based resins refer to resins that are obtained by processing pinene resin and contain rosin acid as a main component. The rosin-based resins (rosins) can be classified depending on whether the rosins are modified or not, that is, can be classified into non-modified rosins (unmodified rosins) and modified rosin products (rosin derivatives). Examples of non-modified rosins include tall rosin (also called tall oil rosin), gum rosin, wood rosin, disproportionated rosins, polymerized rosins, hydrogenated rosins, and other chemically altered rosins. Modified rosins are obtained by modifying non-modified rosins, and examples of modified rosin products include rosin esters, unsaturated carboxylic acid-modified rosins, unsaturated carboxylic acid-modified rosin esters, amide compounds of rosins, and amine salts of rosins.

The styrene-based resins are each a polymer for which a styrene-based monomer is used as a constituent monomer, and examples of the styrene-based resins include a polymer obtained by polymerization with a styrene-based monomer as a main component (not less than 50% by mass). Specific examples of the styrene-based resins include homopolymers obtained by individually polymerizing styrene-based monomers (styrene, o-methylstyrene, m-methylstyrene, p-methylstyrene, $\alpha$-methylstyrene, p-methoxystyrene, p-tert-butylstyrene, p-phenylstyrene, o-chlorostyrene, m-chlorostyrene, p-chlorostyrene, etc.), copolymers each obtained by copolymerizing two or more styrene-based monomers, and copolymers of styrene-based monomers and other monomers that can be copolymerized with styrene-based monomers.

Examples of the other monomers include: acrylonitriles such as acrylonitrile and methacrylonitrile; acrylics; unsaturated carboxylic acids such as methacrylic acid; unsaturated carboxylic acid esters such as methyl acrylate and methyl methacrylate; dienes such as chloroprene and butadiene isoprene; olefins such as 1-butene and 1-pentene; and α, β-unsaturated carboxylic acids or acid anhydrides thereof such as maleic anhydride.

Among the coumarone-based resins, coumarone-indene resins are preferable. The coumarone-indene resins are each a resin containing coumarone and indene as monomer components that form the skeleton (main chain) of the resin. Examples of the monomer components contained in the skeleton other than coumarone and indene include styrene, α-methylstyrene, methylindene, and vinyltoluene.

The amount of the coumarone-indene resin per 100 parts by mass of the rubber component is, for example, greater than 1.0 part by mass and less than 50.0 parts by mass.

The hydroxyl value (OH value) of the coumarone-indene resin is, for example, greater than 15 mg KOH/g and less than 150 mg KOH/g. The OH value is represented, in milligrams, as an amount of potassium hydroxide that is required to neutralize acetic acid bound to hydroxyl groups when 1 g of the resin is acetylated, and is a value measured by potentiometric titration (JIS K0070: 1992).

The softening point of the coumarone-indene resin is, for example, higher than 30°C and lower than 160°C. The softening point is a softening point that is measured with a ring and ball softening point measuring device according to JIS K6220-1: 2001 and that is a temperature at which a ball has descended.

Examples of the terpene-based resins include polyterpenes, terpene phenols, and aromatic modified terpene resins. The polyterpenes are resins obtained by polymerizing terpene compounds, and hydrogenated products thereof. The above terpene compounds are hydrocarbons represented by a composition of (CsHs)n and oxygenated derivatives thereof, and are compounds having, as a basic backbone, a terpene classified into monoterpene ($C_{10}H_{16}$), sesquiterpene ($C_{15}H_{24}$), diterpene ($C_{20}H_{32}$), and the like. Examples of the terpene compounds include α-pinene, β-pinene, dipentene, limonene, myrcene, allo-ocimene, ocimene, α-phellandrene, α-terpinene, γ-terpinene, terpinolene, 1,8-cineole, 1,4-cineole, α-terpineol, β-terpineol, and γ-terpineol.

Examples of the polyterpenes include terpene resins formed from the above-described terpene compounds such as α-pinene resin, β-pinene resin, limonene resin, dipentene resin, and β-pinene-limonene resin, and hydrogenated terpene resins obtained by hydrogenating the terpene resins. Examples of the terpene phenols include resins obtained by copolymerization of the above terpene compound and a phenolic compound, and resins obtained by hydrogenating the resins, and specific examples of the terpene phenols include resins obtained by condensation of the above terpene compound, a phenolic compound, and formalin. Examples of the phenolic compounds include phenol, bisphenol A, cresol, and xylenol. Examples of the aromatic modified terpene resins include resins obtained by modifying a terpene resin with an aromatic compound, and resins obtained by hydrogenating the resins. Here, the aromatic compound is not particularly limited as long as the aromatic compound is a compound having an aromatic ring. Examples of the aromatic compound include: phenolic compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkylstyrenes, alkoxystyrenes, and unsaturated hydrocarbon group-containing styrenes; coumarone; and indene.

The "C5 resins" refer to resins obtained by polymerizing a C5 fraction. Examples of the C5 fraction include petroleum fractions having 4 to 5 carbon atoms such as cyclopentadiene, pentene, pentadiene, and isoprene. As the C5 resins, dicyclopentadiene resins (DCPD resins) are suitably used.

The "C9 resins" refer to resins obtained by polymerizing a C9 fraction, and may be hydrogenated or modified products of the resins. Examples of the C9 fraction include petroleum fractions having 8 to 10 carbon atoms such as vinyltoluene, alkylstyrene, indene, and methylindene. As specific examples of the C9 resins, coumarone-indene resins, coumarone resins, indene resins, and aromatic vinyl-based resins are suitably used. As the aromatic vinyl-based resin, a homopolymer of α-methylstyrene or styrene or a copolymer of α-methylstyrene and styrene is preferable, and a copolymer of α-methylstyrene and styrene is more preferable, for the reasons that the polymer is economic, is easily processed, and has excellent heat generation properties. As the aromatic vinyl-based resins, for example, products commercially available from Kraton Corporation, Eastman Chemical Company, etc., can be used.

The "C5C9 resins" refer to resins obtained by copolymerizing the C5 fraction and the C9 fraction, and may be hydrogenated or modified products of the resins. Examples of the C5 fraction and the C9 fraction include the above-described petroleum fractions. As the C5C9 resins, for example, products commercially available from Tosoh Corporation, Zibo Luhua Hongjin New Material Group Co., Ltd., etc., can be used.

The acrylic-based resins are not particularly limited, but, for example, a non-solvent type acrylic-based resin can be used.

An example of the non-solvent type acrylic-based resin is a (meth)acrylic-based resin (polymer) synthesized by a high-temperature continuous polymerization method (high-temperature continuous bulk polymerization method) (the methods disclosed in US Patent No. 4,414,370, Japanese Laid-Open Patent Publication No. S59-6207, Japanese Examined Patent Publication No. H5-58005, Japanese Laid-Open Patent Publication No. H1-313522, US Patent No.

5,010,166, annual research report of Toagosei Co., Ltd., TREND 2000, No. 3, pages 42-45, etc.) by avoiding use of a polymerization initiator, a chain transfer agent, an organic solvent, etc., which are sub-materials, as much as possible. In the present disclosure, (meth)acrylic means methacrylic and acrylic.

Examples of the monomer component that forms the acrylic-based resin include (meth)acrylic acids, (meth)acrylic acid esters (alkyl esters, aryl esters, aralkyl esters, etc.), (meth)acrylamide, and (meth)acrylic acid derivatives such as (meth)acrylamide derivatives.

Moreover, as the monomer component that forms the acrylic-based resin, an aromatic vinyl such as styrene, $\alpha$-methylstyrene, vinyltoluene, vinylnaphthalene, divinylbenzene, trivinylbenzene, and divinylnaphthalene may be used together with (meth)acrylic acid or a (meth)acrylic acid derivative.

The acrylic-based resin may be a resin composed of only a (meth)acrylic component, or may be a resin also containing a component other than the (meth)acrylic component. In addition, the acrylic-based resin may have a hydroxyl group, a carboxyl group, a silanol group, or the like.

As the resin component, for example, products of Maruzen Petrochemical Co., Ltd., Sumitomo Bakelite Co., Ltd., Yasuhara Chemical Co., Ltd., Tosoh Corporation, Rutgers Chemicals AG, BASF, Arizona Chemical Company, NITTO CHEMICAL CO., LTD., NIPPON SHOKUBAI CO., LTD., ENEOS Corporation, Arakawa Chemical Industries, Ltd., Taoka Chemical Co., Ltd., etc., can be used.

(IV) Reversion Inhibitor

The sidewall rubber composition preferably contains a reversion inhibitor as necessary. Accordingly, reversion is inhibited, and durability is improved. The amount of the reversion inhibitor per 100 parts by mass of the rubber component is preferably not less than 0.1 parts by mass and not greater than 3 parts by mass, more preferably not less than 0.2 parts by mass and not greater than 2.5 parts by mass, and further preferably not less than 0.3 parts by mass and not greater than 2 parts by mass. As a specific reversion inhibitor, for example, Perkalink 900 (1,3-bis(citraconimidomethyl)benzene) manufactured by Flexsys, etc., can be used.

(V) Antioxidant

The sidewall rubber composition preferably contains an antioxidant as necessary. The amount of the antioxidant per 100 parts by mass of the rubber component is, for example, greater than 1 part by mass and less than 10 parts by mass.

Examples of the antioxidant include: naphthylamine-based antioxidants such as phenyl-$\alpha$-naphthylamine; diphenylamine-based antioxidants such as octylated diphenylamine and 4,4'-bis($\alpha$,$\alpha$'-dimethylbenzyl)diphenylamine; p-phenylenediamine-based antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based antioxidants such as a polymer of 2,2,4-trimethyl-1,2-dihydroquinoline; monophenol-based antioxidants such as 2,6-di-t-butyl-4-methylphenol and styrenated phenol; and bis-, tris-, and poly-phenol-based antioxidants such as tetrakis-[methylene-3-(3',5'-di-t-butyl-4'-hydroxyphenyl)propionate]methane. These antioxidants may be used individually, or two or more of these antioxidants may be used in combination.

As the antioxidant, for example, products of Seiko Chemical Co., Ltd., SUMITOMO CHEMICAL COMPANY, LIMITED, Ouchi Shinko Chemical Industrial Co., Ltd., Flexsys, etc., can be used.

(VI) Stearic Acid

The sidewall rubber composition may contain stearic acid as necessary. The amount of the stearic acid per 100 parts by mass of the rubber component is, for example, greater than 0.5 parts by mass and less than 10.0 parts by mass. As the stearic acid, a conventionally known one can be used, and, for example, products of NOF Corporation, Kao Corporation, FUJIFILM Wako Pure Chemical Corporation, New Japan Chemical Co., Ltd., etc., can be used.

(VII) Zinc Oxide

The sidewall rubber composition may contain zinc oxide as necessary. The amount of the zinc oxide per 100 parts by mass of the rubber component is, for example, greater than 0.5 parts by mass and less than 15 parts by mass. As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used.

(VIII) Crosslinking Agent and Vulcanization Accelerator

The sidewall rubber composition preferably contains a crosslinking agent such as sulfur. The amount of the crosslinking agent per 100 parts by mass of the rubber component is, for example, greater than 0.1 parts by mass and less than 10.0 parts by mass.

Examples of the sulfur include powdery sulfur, precipitated sulfur, colloidal sulfur, insoluble sulfur, highly dispersible sulfur, and soluble sulfur, which are generally used in the rubber industry. These sulfurs may be used individually, or two or more of these sulfurs may be used in combination.

As the sulfur, for example, products of Tsurumi Chemical Industry Co., ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

Examples of crosslinking agents other than the sulfur include vulcanizing agents containing sulfur atoms, such as TACKIROL V200 manufactured by Taoka Chemical Co., Ltd., DURALINK HTS (hexamethylene-1,6-bis(thiosulfate) disodium salt dihydrate) manufactured by Flexsys, and KA9188 (1,6-bis(N,N'-dibenzylthiocarbamoyldithio)hexane) manufactured by LANXESS, and organic peroxides such as dicumyl peroxide.

The sidewall rubber composition preferably contains a vulcanization accelerator. The amount of the vulcanization accelerator per 100 parts by mass of the rubber component is, for example, greater than 0.3 parts by mass and less than 10.0 parts by mass.

Examples of the vulcanization accelerator include: thiazole-based vulcanization accelerators such as 2-mercaptobenzothiazole, di-2-benzothiazolyl disulfide, and N-cyclohexyl-2-benzothiazyl sulfenamide; thiuram-based vulcanization accelerators such as tetramethylthiuram disulfide (TMTD), tetrabenzylthiuram disulfide (TBzTD), and tetrakis (2-ethylhexyl)thiuram disulfide (TOT-N); sulfenamide-based vulcanization accelerators such as N-cyclohexyl-2-benzothiazole sulfenamide, N-t-butyl-2-benzothiazolyl sulfenamide, N-oxyethylene-2-benzothiazole sulfenamide, and N,N'-diisopropyl-2-benzothiazole sulfenamide; and guanidine-based vulcanization accelerators such as diphenylguanidine, diorthotolylguanidine, and orthotolylbiguanidine. These vulcanization accelerators may be used individually, or two or more of these vulcanization accelerators may be used in combination.

(IX) Others

In addition to the above-described components, additives generally used in the tire industry, such as fatty acid metal salts, carboxylic acid metal salts, and organic peroxides may be further blended in the sidewall rubber composition. The amount of each of these additives per 100 parts by mass of the rubber component is, for example, greater than 0.1 parts by mass and less than 200 parts by mass.

(2) Production of Sidewall Rubber Composition

The sidewall rubber composition is produced by a general method; for example, a production method including a base kneading step of kneading a rubber component and a filler such as carbon black and a finish kneading step of kneading a crosslinking agent and a kneaded product obtained in the base kneading step.

The kneading can be performed by using, for example, a known (sealed type) kneading machine such as a Banbury mixer, a kneader, and an open roll.

In the base kneading step, the kneading temperature is, for example, higher than 50°C and lower than 200°C, and the kneading time is, for example, longer than 30 seconds and shorter than 30 minutes. In the base kneading step, in addition to the above components, ingredients that are conventionally used in the rubber industry, for example, a plasticizer component such as an oil, stearic acid, zinc oxide, an antioxidant, a wax, a vulcanization accelerator, etc., may be appropriately added and kneaded as necessary.

In the finish kneading step, the crosslinking agent and the kneaded product obtained in the base kneading step are kneaded. In the finish kneading step, the kneading temperature is, for example, higher than room temperature and lower than 80°C, and the kneading time is, for example, longer than 1 minute and shorter than 15 minutes. In the finish kneading step, in addition to the above components, a vulcanization accelerator, zinc oxide, etc., may be appropriately added and kneaded as necessary.

3. Production of Sidewall Member

A sidewall member can be produced by molding the obtained sidewall rubber composition into a predetermined shape.

<2> Production of Pneumatic Tire

The pneumatic tire of the present embodiment can be produced as an unvulcanized tire by shaping the sidewall members obtained above together with other tire members on a tire shaping machine by a normal method.

Specifically, an unvulcanized tire is produced by winding, on a shaping drum, an inner liner as a member for ensuring the airtightness of the tire, a carcass as a member for withstanding the load, impact, and filling air pressure received by the tire, a belt member as a member for strongly tightening the carcass to increase the stiffness of a tread, etc., placing bead portions as members for fixing both ends of the carcass to both side edge portions and fixing the tire to a rim, shaping these members into a toroid shape, then attaching a tread to a center portion of the outer periphery, and attaching the sidewall members on the radially outer side to form sidewall portions.

Thereafter, a tire is obtained by placing the produced unvulcanized tire into a vulcanization mold and heating and pressurizing the unvulcanized tire therein. The heating and pressurizing is performed by a known method using a mold including side plates each having engravings on its surface opposing the projection formation portion, for forming micro projections. The vulcanization temperature is, for example, higher than 120°C and lower than 200°C, and the vulcanization time is, for example, longer than 5 minutes and shorter than 60 minutes.

The application range of the tire of the present invention is not particularly limited, and the present invention can be applied to any of tires such as tires for a passenger car, tires for a truck or a bus, tires for a motorcycle, and the like, but is preferably applied to pneumatic tires for a passenger car for which importance is particularly placed on appearance, that is, tires that are mounted on a car running on four wheels and that have a maximum load capacity of not greater than 1000 Kg.

If the above-described maximum load capacity is not greater than 1000 Kg, the maximum load capacity is not particularly limited. However, generally, as the maximum load capacity increases, the tire weight tends to increase, and the heat generation properties of the tire tend to increase accordingly. Thus, the maximum load capacity is preferably not greater than 900 Kg, more preferably not greater than 800 Kg, and further preferably not greater than 700 Kg.

Moreover, from the viewpoint of decreasing the heat generation properties of the tire, the above-described tire weight is preferably not greater than 20 Kg, more preferably not greater than 15 Kg, and further preferably not greater than 12 Kg, not greater than 10 Kg, and not greater than 8 Kg. The tire weight herein is the weight of the entire tire, and in the case where the tire is provided with a sealant, a sponge, a three-dimensional network structure, an electronic component, etc., on the tire inner cavity surface, the tire weight is a weight including the weights of these components.

Among pneumatic tires for a passenger car, in the case where the present invention is applied to a tire that is mounted on a high-performance vehicle and that is expected to be used under severe conditions, specifically, a pneumatic tire for a passenger car which has a cross-sectional height of not greater than 96 mm and a cross-sectional width of not less than 185 mm, the advantageous effects of the present invention can be particularly significantly achieved.

Moreover, in recent years, with the spread of hybrid vehicles and electric vehicles, the weights of vehicles have tended to increase. Accordingly, a greater burden is placed on tires, especially, on sidewall portions, so that there is a concern that damage due to occurrence of cracks in the sidewall portion, etc., may be caused. However, when the tire according to the present invention is mounted, the burden on the sidewall portion can be reduced, so that it is preferable to mount the tire according to the present invention.

EXAMPLES

Hereinafter, the present invention will be further specifically described by means of examples.

In the examples described below, a total of 12 types of test tires of Example 1 to Example 7 and Comparative Example 1 to Comparative Example 5 that have a size of 225/40R18 (cross-sectional height: section height is 90 mm) and between which the height h and the maximum width w of each micro projection, the interval d, and the constitution of the rubber composition for forming the sidewall member are different, were produced and were evaluated for crack resistance and appearance of the sidewall portion.

1. Production of Sidewall Member

First, sidewall members were produced by using sidewall rubber compositions.

(1) Blending Materials of Sidewall Rubber Composition

First, each blending material described below was prepared.

(a) Rubber Component

(I) IR: NIPOL IR2200 manufactured by Zeon Corporation
(II) BR: UBEPOL-BR150B manufactured by Ube Industries, Ltd.
(cis content: 97% by mass)
(III) SBR: HPR850 (solution-polymerized SBR) manufactured by JSR Corporation
(styrene content: 27.5% by mass, vinyl bond content: 58.5% by mass)

(b) Blending Materials Other Than Rubber Component

(I) CB: SHOBLACK N660 manufactured by Cabot Japan K.K.
(II) Silica: VN3 manufactured by Evonik Industries Ag
(III) Zinc oxide: Zinc Oxide Type-1 manufactured by Mitsui Mining & Smelting Co., Ltd.
(IV) Stearic acid: stearic acid "Camellia" manufactured by NOF Corporation
(V) Antioxidant 1: NOCRAC 6C (6PPD) manufactured by Ouchi Shinko Chemical Industrial Co., Ltd.
(N-phenyl-N'-(1,3-dimethylbutyl)-p-phenylenediamine)
(VI) Antioxidant 2: NOCRAC 224 manufactured by Ouchi Shinko Chemical Industrial Co., Ltd.
(2,2,4-trimethyl-1,2-dihydroquinoline polymer)
(VII) Sulfur: powdery sulfur manufactured by Karuizawa Sulfur Co., Ltd.
(VIII) Vulcanization accelerator: NOCCELER CZ manufactured by Ouchi Shinko Chemical Industrial Co., Ltd.
(N-cyclohexyl-2-benzothiazolyl sulfenamide)

(2) Production of Sidewall Rubber Composition

A kneaded product was obtained by kneading the materials other than the sulfur and the vulcanization accelerators under a condition of 150°C for 5 minutes by using a 3 L Banbury mixer in accordance with each of blending formulas shown in Table 1 and Table 2. The unit of each blending amount is parts by mass.
Next, the sulfur and the vulcanization accelerators were added to the obtained kneaded product, and the mixture was kneaded under a condition of 80°C for 5 minutes by using an open roll, to obtain a sidewall rubber composition.
Next, sidewall members having a predetermined shape were produced by using the obtained sidewall rubber composition.

2. Production of Tire

The sidewall members obtained above were attached together with other tire members to form an unvulcanized tire, and the unvulcanized tire was press-vulcanized under a condition of 140°C for 50 minutes to produce each test tire having a cross-sectional width shown in Table 1 or Table 2.

3. Measurement of Various Dimensions and Physical Properties and Calculation of Parameters

In a state where each test tire was fitted on a normal rim, the internal pressure thereof was set to 250 kPa, and no load was applied to the test tire, the cross-sectional width and the cross-sectional height of the tire, and the heights, the maximum widths, and the magnitudes of the intervals of the micro projections in the projection formation portion were measured, and a ten-point average roughness Rz in a region having an area that is 1/4 of the area of the micro projections was measured according to JIS B 0601 (2001).
Next, the thickness at a tire cross-sectional width position of the sidewall portion was measured. Then, the rubber composition was cut out from the sidewall portion to prepare a test piece having a predetermined dimension, and a loss tangent $\tan\delta$ of the test piece was measured using EPLEXOR manufactured by NETZSCH-Gerätebau GmbH, under conditions of temperature: 70°C, initial strain: 2.5%, dynamic strain: $\pm$1%, frequency: 10Hz, and deformation mode: tension.
Moreover, a stress M100 at a tensile strain of 100% (MPa) and a stress M300 at a tensile strain of 300% (MPa) in a tensile test under an environment of 25°C at a tensile speed of 500 mm/min were measured according to JIS K6251 using an autograph manufactured by SHIMADZU CORPORATION.
Next, "$\tan\delta \times H$" and "$Wt \times M300/M100$" were calculated from the results of the above respective measurements.

The above results are summarized in Table 1 and Table 2.

4. Performance Evaluation Test (Appearance Evaluation)

Appearance evaluation was conducted using a drum tester. Specifically, each test tire was fitted onto a normal rim, and then filled with a normal internal pressure (250 kpa), a load that was 75% of the normal load was applied to the test tire, and the test tire was caused to run for 10,000 km. For the appearance of the side portion of each tire whose running was completed, 20 evaluators scored on a 5-point scale (the higher the score, the better the appearance), and the obtained scores were summed and used as an evaluation result for each test tire.

Next, the evaluation results were indexed based on the following equation with the evaluation result of Comparative Example 2 being regarded as 100, to evaluate appearance. A higher value indicates that the appearance is better.

Appearance performance = [(evaluation result of test tire)/(evaluation result of Comparative Example 2)]$\times$100

The evaluation results are summarized in Table 1 and Table 2.

[Table 1]

| | Ex. 1 | Ex. 2 | Ex. 3 | Ex. 4 | Ex. 5 | Ex. 6 | Ex. 7 |
|---|---|---|---|---|---|---|---|
| (Blending formula) | | | | | | | |
| IR | 40 | 40 | 40 | 40 | 40 | 40 | 40 |
| BR | 60 | 60 | 60 | 30 | 60 | 60 | 60 |
| SBR | - | - | - | 30 | - | - | - |
| CB | 50 | 45 | 55 | 50 | 45 | 50 | 50 |
| Silica | - | - | - | - | 5 | - | - |
| Zinc oxide | 2 | 2 | 2 | 2 | 2 | 2 | 2 |
| Stearic acid | 1 | 1 | 1 | 1 | 1 | 1 | 1 |
| Antioxidant 1 | 1 | 1 | 1 | 1 | 1 | 1 | 1 |
| Antioxidant 2 | 1 | 1 | 1 | 1 | 1 | 1 | 1 |
| Sulfur | 1.5 | 1.5 | 1.5 | 1.5 | 1.5 | 1.5 | 1.5 |
| Vulcanization accelerator | 1.5 | 1.5 | 1.5 | 1.5 | 1.5 | 1.5 | 1.5 |
| (Parameters) | | | | | | | |
| M300/M100 | 4.5 | 4.1 | 4.5 | 4.8 | 4.2 | 4.5 | 4.5 |
| tan$\delta$ | 0.08 | 0.07 | 0.09 | 0.09 | 0.07 | 0.08 | 0.08 |
| Micro projection height [mm] | 0.3 | 0.3 | 0.3 | 0.3 | 0.3 | 0.1 | 0.4 |
| Micro projection interval [mm] | 0.2 | 0.2 | 0.2 | 0.2 | 0.2 | 0.1 | 0.3 |
| Micro projection maximum width [mm] | 0.3 | 0.3 | 0.3 | 0.3 | 0.3 | 0.05 | 0.4 |
| Projection formation portion area [$mm^2$] | 30 | 30 | 30 | 30 | 30 | 50 | 15 |
| Number of formed micro projections | 50 | 50 | 50 | 50 | 50 | 75 | 25 |
| Tire cross-sectional width Wt [mm] | 225 | 225 | 225 | 225 | 225 | 225 | 235 |
| Tire cross-sectional height H [mm] | 90 | 90 | 90 | 90 | 90 | 90 | 82 |
| tan$\delta\times$H | 7.2 | 6.3 | 8.1 | 8.1 | 6.3 | 7.2 | 6.56 |
| Wt$\times$M300/M100 | 1012.5 | 922.5 | 1012.5 | 1080 | 945 | 1012.5 | 1057.5 |
| Rz [$\mu$m] | 15 | 15 | 15 | 15 | 15 | 15 | 15 |
| Sidewall rubber thickness [mm] | 8 | 8 | 8 | 8 | 8 | 15 | 8 |

(continued)

| | | | | | | | |
|---|---|---|---|---|---|---|---|
| (Performance evaluation) | | | | | | | |
| Appearance evaluation result | 120 | 116 | 126 | 128 | 118 | 112 | 118 |

[Table 2]

| | Comp. Ex. 1 | Comp. Ex. 2 | Comp. Ex. 3 | Comp. Ex. 4 | Comp. Ex. 5 |
|---|---|---|---|---|---|
| (Blending formula) | | | | | |
| IR | 40 | 40 | 40 | 40 | 40 |
| BR | 60 | 60 | 60 | 60 | 60 |
| SBR | - | - | - | - | - |
| CB | 30 | 55 | 50 | 50 | 50 |
| Silica | - | - | - | - | - |
| Zinc oxide | 2 | 2 | 2 | 2 | 2 |
| Stearic acid | 1 | 1 | 1 | 1 | 1 |
| Antioxidant 1 | 1 | 1 | 1 | 1 | 1 |
| Antioxidant 2 | 1 | 1 | 1 | 1 | 1 |
| Sulfur | 1.5 | 2.0 | 1.5 | 1.5 | 1.5 |
| Vulcanization accelerator | 1.5 | 1.0 | 1.5 | 1.5 | 1.5 |
| (Parameters) | | | | | |
| M300/M100 | 3.5 | 4.5 | 4.5 | 4.5 | 4.5 |
| tanδ | 0.06 | 0.15 | 0.08 | 0.08 | 0.08 |
| Micro projection height [mm] | 0.3 | 0.3 | 0.8 | 0.3 | 0.8 |
| Micro projection interval [mm] | 0.2 | 0.2 | 0.8 | 0.2 | 0.8 |
| Micro projection maximum width [mm] | 0.3 | 0.3 | 0.8 | 0.3 | 0.8 |
| Projection formation portion area [$mm^2$] | 30 | 30 | 30 | 5 | 5 |
| Number of formed micro projections | 50 | 50 | 50 | 10 | 10 |
| Tire cross-sectional width Wt [mm] | 225 | 225 | 225 | 225 | 225 |
| Tire cross-sectional height H [mm] | 90 | 90 | 113 | 90 | 90 |
| tanδ×H | 5.4 | 13.5 | 9.04 | 7.2 | 7.2 |
| Wt×M300/M100 | 787.5 | 1012.5 | 1012.5 | 1012.5 | 1012.5 |
| Rz [μm] | 15 | 15 | 15 | 40 | 15 |
| Sidewall rubber thickness [mm] | 8 | 8 | 8 | 8 | 20 |
| (Performance evaluation) | | | | | |
| Appearance evaluation result | 80 | 100 | 92 | 92 | 80 |

From Table 1 and Table 2, it is found that Example 1 to Example 7 which satisfy the requirements of the present invention have excellent appearance.

Moreover, it is also found that among Examples 1 to 5 in which the tire cross-sectional widths Wt, the cross-sectional heights H, and the sidewall rubber thicknesses are equal to each other, Examples 1, 3, and 4 having M300/M100 of not less than 4.5 have better crack resistance. In addition, among the Examples, the appearance evaluation result of Example 6 having a large sidewall rubber thickness of 15 mm is slightly inferior to those of the other Examples.

REFERENCE SIGNS LIST

1. Sidewall portion
2. Sidewall
3. Projection formation portion
4,5. Micro projection
21. Sidewall outer surface
41,51. Bottom surface
42,52. Top surface
h. Height of micro projections
d. Interval of micro projections
w. Maximum width of micro projections

## Claims

**1.** A pneumatic tire comprising sidewall portions (1), wherein

at least one of the sidewall portions (1) includes a projection formation portion (3) in which a plurality of micro projections (4, 5) are formed on an outer surface (21) thereof,
the micro projections (4, 5) each have a height (h) of not greater than 0.5 mm,
the projection formation portion (3) has an area of not less than 10 $mm^2$,
the number of the micro projections (4, 5) formed at an interval (d) of not greater than 0.5 mm in at least one direction is 20 or more, wherein the interval refers to the minimum linear distance between the tops of the micro projections adjacent to each other when the micro projections are seen in a direction perpendicular to the one direction, **characterized in that**
when a stress at a tensile strain of 100% and a stress at a tensile strain of 300% of the sidewall portion (1) in a tensile test under an environment of 25°C at a tensile speed of 500 mm/min are denoted by M100 (MPa) and M300 (MPa), respectively, M300/M100 is greater than 4.0, and **in that**
a loss tangent tanδ of the sidewall portion (1) measured under conditions of temperature: 70°C, initial strain: 2.5%, dynamic strain: ±1%, frequency: 10Hz, and deformation mode: tension is not greater than 0.09.

**2.** The pneumatic tire according to claim 1, wherein the loss tangent tanδ is not greater than 0.08.

**3.** The pneumatic tire according to claim 2, wherein the loss tangent tanδ is not greater than 0.07.

**4.** The pneumatic tire according to any one of claims 1 to 3, wherein the M300/M100 is not less than 4.5.

**5.** The pneumatic tire according to any one of claims 1 to 4, wherein, when a tire cross-sectional height is denoted by H (mm), H and the loss tangent tanδ satisfy the following (Expression 1),

$$\tan\delta \times H \leq 8.64 \qquad \text{(Expression 1).}$$

**6.** The pneumatic tire according to any one of claims 1 to 5, wherein, when a tire cross-sectional width is denoted by Wt (mm), Wt and the M300/M100 satisfy the following (Expression 2),

$$Wt \times (M300/M100) \geq 740 \qquad \text{(Expression 2).}$$

**7.** The pneumatic tire according to any one of claims 1 to 6, wherein the micro projections (4, 5) each have a vertical cross-section in which a width thereof gradually decreases from a bottom surface (41, 51) side toward a top surface (42, 52) side.

**8.** The pneumatic tire according to any one of claims 1 to 7, wherein a thickness at a tire cross-sectional width position of a rubber composition of the sidewall portion (1) is not less than 2 mm and not greater than 15 mm.

9. The pneumatic tire according to claim 8, wherein the thickness at the tire cross-sectional width position of the rubber composition of the sidewall portion (1) is not less than 2 mm and not greater than 10 mm.

10. The pneumatic tire according to any one of claims 1 to 9, wherein shapes of the micro projections (4, 5) are each a columnar shape, a frustum shape, or a rib shape.

11. The pneumatic tire according to any one of claims 1 to 10, wherein the micro projections (4, 5) each have a height (h) of not greater than 0.4 mm.

12. The pneumatic tire according to any one of claims 1 to 11, wherein the micro projections (4, 5) each have a maximum width (w) of not less than 0.03 mm and not greater than 0.5 mm.

13. The pneumatic tire according to any one of claims 1 to 12, wherein an interval (d) between the micro projections (4, 5) adjacent to each other is not greater than 0.2 mm.

14. The pneumatic tire according to any one of claims 1 to 13, wherein the micro projections (4) each have a circular horizontal cross-section and have an average diameter of not less than 0.03 mm and not greater than 0.5 mm.

15. The pneumatic tire according to any one of claims 1 to 13, wherein the micro projections (5) are each a blade-shaped micro projection having a rectangular horizontal cross-section and have an average width of not less than 0.03 mm and not greater than 0.5 mm.

16. The pneumatic tire according to any one of claims 1 to 15, wherein, in a region having an area that is at least 1/4 of an area of the micro projections (4, 5), a surface roughness is not less than 5 μm and not greater than 30 μm as a ten-point average roughness Rz measured according to JIS B 0601 (2001).

17. The pneumatic tire according to any one of claims 1 to 16, wherein the projection formation portion (3) has an area of not less than 15 $mm^2$.

18. The pneumatic tire according to any one of claims 5 to 17, wherein the tire cross-sectional height H (mm) is greater than 96 mm.

19. The pneumatic tire according to any one of claims 6 to 18, wherein the tire cross-sectional width Wt (mm) is less than 185 mm.

20. The pneumatic tire according to any one of claims 1 to 19, wherein the pneumatic tire is a pneumatic tire for a passenger car.

21. The pneumatic tire according to claim 20, wherein the pneumatic tire is a pneumatic tire for a passenger car that has a cross-sectional height of not greater than 96 mm and a cross-sectional width of not less than 185 mm.

## Patentansprüche

1. Luftreifen, der Seitenwandabschnitte (1) umfasst, wobei

mindestens einer der Seitenwandabschnitte (1) einen Vorsprungformationsabschnitt (3) umfasst, in dem eine Vielzahl von Mikrovorsprüngen (4, 5) auf einer Außenfläche (21) davon gebildet ist,
die Mikrovorsprünge (4, 5) jeweils eine Höhe (h) von nicht mehr als 0,5 mm aufweisen,
der Vorsprungformationsabschnitt (3) eine Fläche von nicht weniger als 10 $mm^2$ aufweist,
die Anzahl der Mikrovorsprünge (4, 5), die in einem Intervall (d) von nicht mehr als 0,5 mm in mindestens einer Richtung gebildet sind, 20 oder mehr beträgt, wobei sich das Intervall auf den minimalen linearen Abstand zwischen den Oberseiten einander benachbarter Mikrovorsprünge bezieht, wenn die Mikrovorsprünge in einer Richtung senkrecht zu der einen Richtung betrachtet werden,
**dadurch gekennzeichnet, dass**
wenn eine Spannung bei einer Zugdehnung von 100 % und eine Spannung bei einer Zugdehnung von 300 % des Seitenwandabschnitts (1) in einem Zugversuch in einer Umgebung von 25 °C bei einer Zuggeschwindigkeit von 500 mm/min durch M100 (MPa) bzw. M300 (MPa) bezeichnet werden, M300/M100 größer als 4,0 ist, und

dadurch, dass
ein Verlusttangens tanδ des Seitenwandabschnitts (1), gemessen unter Bedingungen von Temperatur: 70 °C, Anfangsdehnung: 2,5 %, dynamische Dehnung: ±1 %, Frequenz: 10 Hz und Verformungsmodus: Zug, nicht größer als 0,09 ist.

2. Luftreifen nach Anspruch 1, wobei der Verlusttangens tanδ nicht größer als 0,08 ist.

3. Luftreifen nach Anspruch 2, wobei der Verlusttangens tanδ nicht größer als 0,07 ist.

4. Luftreifen nach einem der Ansprüche 1 bis 3, wobei das M300/M100 nicht kleiner als 4,5 ist.

5. Luftreifen nach einem der Ansprüche 1 bis 4, wobei, wenn eine Reifenquerschnittshöhe mit H (mm) bezeichnet wird, H und der Verlusttangens tanδ das Folgende (Ausdruck 1) erfüllen,

$$\tan\delta \times H \leq 8{,}64 \text{ (Ausdruck 1).}$$

6. Luftreifen nach einem der Ansprüche 1 bis 5, wobei, wenn eine Reifenquerschnittsbreite mit Wt (mm) bezeichnet wird, Wt und das M300/M100 das Folgende (Ausdruck 2) erfüllen,

$$Wt \times (M300/M100) \geq 740 \text{ (Ausdruck 2).}$$

7. Luftreifen nach einem der Ansprüche 1 bis 6, wobei die Mikrovorsprünge (4, 5) jeweils einen vertikalen Querschnitt aufweisen, in dem eine Breite davon von einer Unterseite (41, 51) zu einer Oberseite (42, 52) allmählich abnimmt.

8. Luftreifen nach einem der Ansprüche 1 bis 7, wobei eine Dicke an einer Reifenquerschnittsbreitenposition einer Kautschukzusammensetzung des Seitenwandabschnitts (1) nicht weniger als 2 mm und nicht mehr als 15 mm beträgt.

9. Luftreifen nach Anspruch 8, wobei die Dicke an der Reifenquerschnittsbreitenposition der Kautschukzusammensetzung des Seitenwandabschnitts (1) nicht weniger als 2 mm und nicht mehr als 10 mm beträgt.

10. Luftreifen nach einem der Ansprüche 1 bis 9, wobei Formen der Mikrovorsprünge (4, 5) jeweils eine Säulenform, eine Kegelstumpfform oder eine Rippenform sind.

11. Luftreifen nach einem der Ansprüche 1 bis 10, wobei die Mikrovorsprünge (4, 5) jeweils eine Höhe (h) von nicht mehr als 0,4 mm aufweisen.

12. Luftreifen nach einem der Ansprüche 1 bis 11, wobei die Mikrovorsprünge (4, 5) jeweils eine maximale Breite (w) von nicht weniger als 0,03 mm und nicht mehr als 0,5 mm aufweisen.

13. Luftreifen nach einem der Ansprüche 1 bis 12, wobei ein Intervall (d) zwischen einander benachbarten Mikrovorsprüngen (4, 5) nicht größer als 0,2 mm ist.

14. Luftreifen nach einem der Ansprüche 1 bis 13, wobei die Mikrovorsprünge (4) jeweils einen kreisförmigen horizontalen Querschnitt aufweisen und einen durchschnittlichen Durchmesser von nicht weniger als 0,03 mm und nicht mehr als 0,5 mm aufweisen.

15. Luftreifen nach einem der Ansprüche 1 bis 13, wobei die Mikrovorsprünge (5) jeweils ein lamellenförmiger Mikrovorsprung mit einem rechteckigen horizontalen Querschnitt sind und eine durchschnittliche Breite von nicht weniger als 0,03 mm und nicht mehr als 0,5 mm aufweisen.

16. Luftreifen nach einem der Ansprüche 1 bis 15, wobei in einem Bereich mit einer Fläche, die mindestens 1/4 einer Fläche der Mikrovorsprünge (4, 5) beträgt, eine Oberflächenrauheit nicht weniger als 5 μm und nicht mehr als 30 μm als eine Zehnpunkt-Durchschnittsrauheit Rz, gemessen gemäß JIS B 0601 (2001), beträgt.

17. Luftreifen nach einem der Ansprüche 1 bis 16, wobei der Vorsprungformationsabschnitt (3) eine Fläche von nicht

weniger als 15 $mm^2$ aufweist.

**18.** Luftreifen nach einem der Ansprüche 5 bis 17, wobei die Reifenquerschnittshöhe H (mm) mehr als 96 mm beträgt.

**19.** Luftreifen nach einem der Ansprüche 6 bis 18, wobei die Reifenquerschnittsbreite Wt (mm) weniger als 185 mm beträgt.

**20.** Luftreifen nach einem der Ansprüche 1 bis 19, wobei der Luftreifen ein Luftreifen für einen Personenkraftwagen ist.

**21.** Luftreifen nach Anspruch 20, wobei der Luftreifen ein Luftreifen für einen Personenkraftwagen ist, der eine Querschnittshöhe von nicht mehr als 96 mm und eine Querschnittsbreite von nicht weniger als 185 mm aufweist.

## Revendications

**1.** Bandage pneumatique comprenant des portions formant parois latérales (1), dans lequel

l'une au moins des portions formant parois latérales (1) inclut une portion de formation de projection (3) dans laquelle une pluralité de micro-projections (4, 5) sont formées sur une surface extérieure (21) de celle-ci,
les micro-projections (4, 5) ont chacune une hauteur (h) qui n'est pas supérieure à 0,5 mm,
la portion de formation de projection (3) a une superficie qui n'est pas inférieure à 10 $mm^2$,
le nombre de micro-projections (4, 5) formées à un intervalle (d) qui n'est pas supérieur à 0,5 mm dans au moins une direction est de 20 ou plus, l'intervalle se référant à la distance linéaire minimum entre les sommets des micro-projections adjacentes les unes aux autres quand les micros-projections sont vues dans une direction perpendiculaire à ladite une direction,
**caractérisé en ce que**
quand une tension à une contrainte de traction de 100 % et une tension à une contrainte de traction de 300 % de la portion formant paroi latérale (1) dans un essai de traction sous un environnement de 25 °C à une vitesse de traction de 500 mm/min sont désignées par M100 (MPa) et M300 (MPa), respectivement, M300/M100 est supérieur à 4,0, et
**en ce que**
une tangente de perte tanδ de la portion formant paroi latérale (1), mesurée sous des conditions de température de 70 °C, de contrainte initiale de 2,5 %, de contrainte dynamique de ± 1 %, de fréquence de 10 Hz et de mode de déformation en traction, n'est pas supérieure à 0,09.

**2.** Bandage pneumatique selon la revendication 1, dans lequel la tangente de perte tanδ n'est pas supérieure à 0,08.

**3.** Bandage pneumatique selon la revendication 2, dans lequel la tangente de perte tanδ n'est pas supérieure à 0,07.

**4.** Bandage pneumatique selon l'une quelconque des revendications 1 à 3, dans lequel la valeur M300/M100 n'est pas inférieure à 4,5.

**5.** Bandage pneumatique selon l'une quelconque des revendications 1 à 4, dans lequel, quand une hauteur de section transversale du pneumatique est désignée par H (mm), H et la tangente de perte tanδ satisfont à l'(expression 1) suivante :

$$\tan\delta \times H \leq 8{,}64 \qquad \text{(expression 1).}$$

**6.** Bandage pneumatique selon l'une quelconque des revendications 1 à 5, dans lequel, quand une largeur de section transversale du pneumatique est désignée par Wt(mm), Wt et la valeur M300/M100 satisfont à l'(expression 2) suivante :

$$Wt \times (M300/M100) \geq 740 \quad \text{(expression 2).}$$

**7.** Bandage pneumatique selon l'une quelconque des revendications 1 à 6, dans lequel les micros-projection (4, 5) ont chacune une section transversale verticale dans laquelle une largeur de celle-ci diminue graduellement depuis

un côté de surface de fond (41, 51) vers un côté de surface de sommet (42, 52).

**8.** Bandage pneumatique selon l'une quelconque des revendications 1 à 7, dans lequel une épaisseur au niveau d'une position de largeur de section transversale du pneumatique d'une composition de caoutchouc de la portion formant paroi latérale (1) n'est pas inférieure à 2 mm et n'est pas supérieure à 15 mm.

**9.** Bandage pneumatique selon la revendication 8, dans lequel l'épaisseur au niveau de la position de largeur de section transversale du pneumatique de la composition de caoutchouc de la portion formant paroi latérale (1) n'est pas inférieure à 2 mm et n'est pas supérieure à 10 mm.

**10.** Bandage pneumatique selon l'une quelconque des revendications 1 à 9, dans lequel des formes des micros-projection (4, 5) ont chacune une forme de colonne, une forme de tronc, ou une forme de nervure.

**11.** Bandage pneumatique selon l'une quelconque des revendications 1 à 10, dans lequel les micro-projections (4, 5) ont chacune une hauteur qui n'est pas supérieure à 0,4 mm.

**12.** Bandage pneumatique selon l'une quelconque des revendications 1 à 11, dans lequel les micro-projections (4, 5) ont chacune une largeur maximum (w) qui n'est pas inférieure à 0,03 mm et qui n'est pas supérieure à 0,5 mm.

**13.** Bandage pneumatique selon l'une quelconque des revendications 1 à 12, dans lequel un intervalle (d) entre les micro-projections (4, 5) adjacentes les unes aux autres n'est pas supérieur à 0,2 mm.

**14.** Bandage pneumatique selon l'une quelconque des revendications 1 à 13, dans lequel les micro-projections (4) ont chacune une section transversale horizontale circulaire et ont un diamètre moyen qui n'est pas inférieur à 0,03 mm et qui n'est pas supérieur à 0,5 mm.

**15.** Bandage pneumatique selon l'une quelconque des revendications 1 à 13, dans lequel les micro-projections (4, 5) ont chacune une micro-projection en forme de lame ayant une section transversale horizontale rectangulaire et ont une largeur moyenne qui n'est pas inférieure à 0,03 mm et qui n'est pas supérieure à 0,5 mm.

**16.** Bandage pneumatique selon l'une quelconque des revendications 1 à 15, dans lequel, dans une région ayant une superficie qui est d'au moins ¼ d'une superficie des micro-projections (4, 5), une rugosité superficielle n'est pas inférieure à 5 $\mu$m et n'est pas supérieure à 30 $\mu$m à titre de rugosité moyenne en dix points mesurée selon la norme industrielle japonaise JIS B 0601 (2001).

**17.** Bandage pneumatique selon l'une quelconque des revendications 1 à 16, dans lequel la portion de formation de projection (3) a une superficie qui n'est pas inférieure à 15 $mm^2$.

**18.** Bandage pneumatique selon l'une quelconque des revendications 5 à 17, dans lequel la hauteur de section transversale du pneumatique H (mm) est supérieure à 96 mm.

**19.** Bandage pneumatique selon l'une quelconque des revendications 6 à 18, dans lequel la largeur de section transversale du pneumatique Wt (mm) est inférieure à 185 mm.

**20.** Bandage pneumatique selon l'une quelconque des revendications 1 à 19, dans lequel le bandage pneumatique est un pneumatique pour une voiture particulière.

**21.** Bandage pneumatique selon la revendication 20, dans lequel le bandage pneumatique est un pneumatique pour une voiture particulière, qui a une hauteur de section transversale qui n'est pas supérieure à 96 mm et une largeur de section transversale qui n'est pas inférieure à 185 mm.

FIG.1A

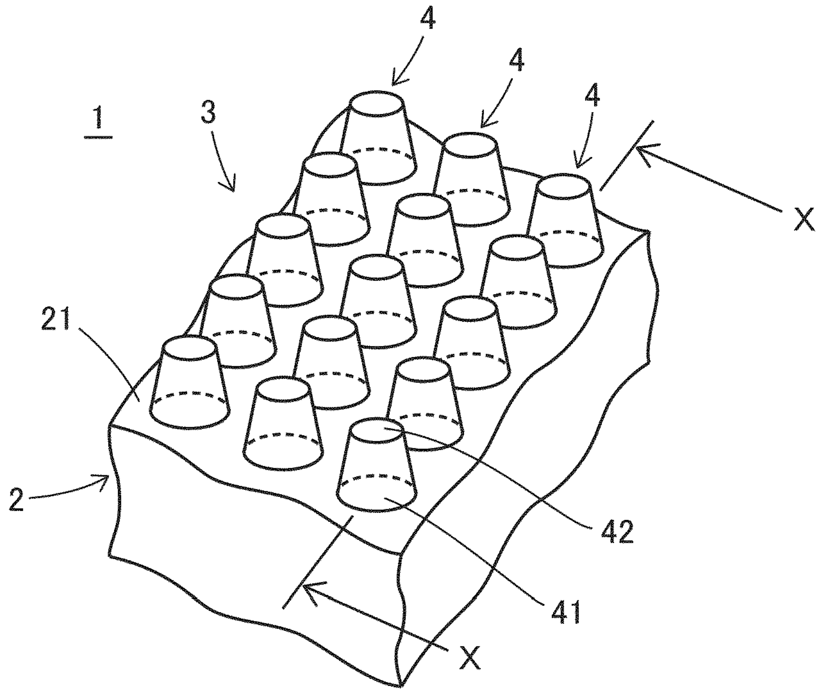


FIG.1B

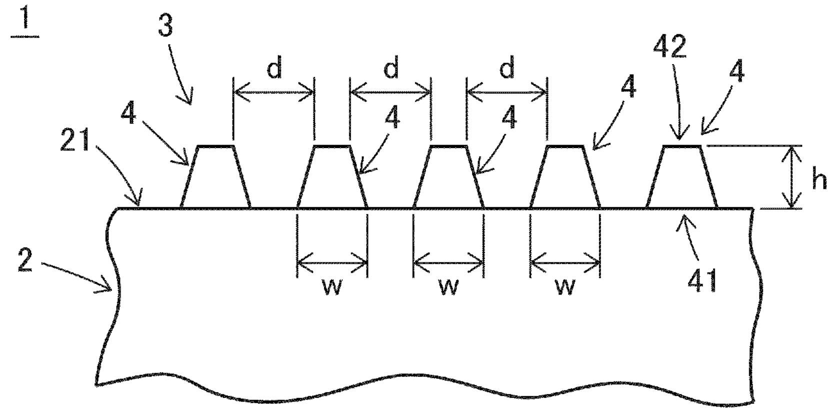

FIG.2A

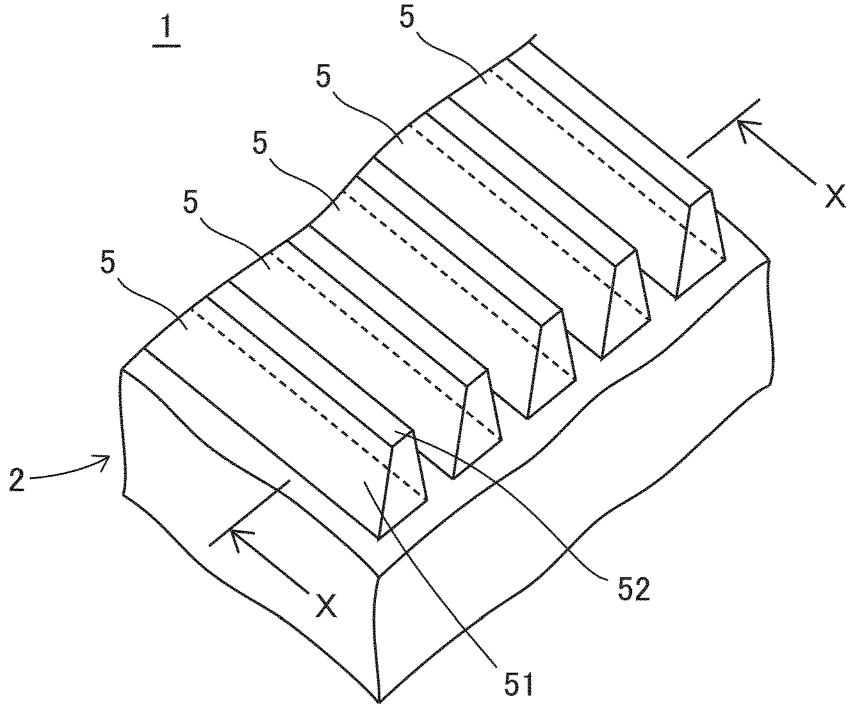


FIG.2B

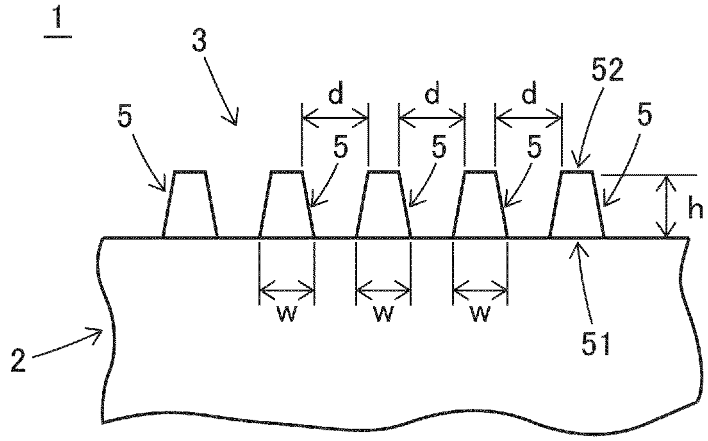

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018109126 A
- JP 5022003 B
- JP 2014061820 A
- US 4414370 A
- JP 59006207 A
- JP H558005 B
- JP H1313522 A
- US 5010166 A